# EUROPEAN PATENT SPECIFICATION

(11) **EP 1 439 097 B1**
(45) Date of publication and mention of the grant of the patent: **19.08.2009**
(21) Application number: 04005470.2
(22) Date of filing: 29.03.1996
(51) Int. Cl.: B60R 21/16

(54) **Bag for vehicle air bag device with a fabric diffuser**
Bag für Fahrzeug Air-bag Vorrichtung mit Gasdurchfluss-Regulator aus Stoff
Coussin pour air bag avec un diffuseur en tissus

(43) Date of publication of application: 21.07.2004
(62) Divisional of application: 96907727.0
(73) Proprietor: TOYODA GOSEI CO., LTD., Nishi-Kasugai-gun, Aichi-ken, 452-8564 (JP)
(72) Inventor: Sogi, Hidehito, Toyo Tire & Rubber Co., Ltd., Nishikamo-gun Aichi-ken 470-02 (JP); Ozaki, Toru, Toyo Tire & Rubber Co., Ltd., Nishikamo-gun Aichi-ken 470-02 (JP); Ushio, Masahiro, Toyo Tire & Rubber Co., Ltd., Nishikamo-gun Aichi-ken 470-02 (JP); Nakayama, Kazuhiro, Toyo Tire & Rubber Co., Ltd., Nishikamo-gun Aichi-ken 470-02 (JP)
(74) Representative: Strehl Schübel-Hopf & Partner

(56) References cited:
- DE-A- 4 442 118

## Description

### BACKGROUND ART

A kind of bag for a vehicle air bag device is known which comprises an occupant-associated panel and an inflator-associated panel which are joined together along their peripheral edges to form a flexible bag construction which is inflatable into a three-dimensional form (see JP-A-51-31581). An inflator is attached to such bag. Upon vehicle collision, the gas evolved in the inflator instantaneously flows into the bag, inflating the latter to protect the occupant against the shock due to the collision.

In said bag for a vehicle air bag device, the occupant -associated panel and inflator-associated panel are connected by tethers. The intention is intended to prevent the spacing between the occupant-associated panel and the inflator-associated panel from becoming greater than the length of the tethers when the bag is inflated.

Thus, the deployment distance of the bag, i.e., the amount of jump-out of the occupant-associated panel can be controlled by the tethers. (The distance from the plane of the steering wheel at that place on the occupant-associated panel which is nearest to the occupant is called the deployment distance.) However, with tethers alone, the deployment speed of the bag cannot be reduced. (The speed at which that place on the occupant-associated panel which is farthest from the plane of the steering wheel moves in the direction orthogonal to the plane of the steering wheel, i.e., axially of the steering wheel is called the deployment speed.) If the deployment speed is high, there is the possibility of the bag, when inflated, coming into contact with the occupant at a relatively high speed depending on the occupant's posture. Further, with the tethers alone, it cannot be expected that the bag will quickly spread toward its outer periphery, i.e., in the direction orthogonal to the jump-out direction, for example, toward the occupant's abdominal region.

Therefore, in order to decrease the deployment speed and secure quick spreading in the direction orthogonal to the jump-out direction, some of the known bags for vehicle air bag devices include a flow regulator adapted to divert the gas flow in the vicinity of the inflator so as to prevent it from directly hitting the occupant-associated panel (JP-A-53-45574, US-A-5,172,933, EP-A-0 600 598, and DE-A-41 21 659).

However, it has been found that with the regulator alone, the deployment distance cannot be controlled and that the deployment speed can be reduced only to a limited degree.

Therefore, it may be contemplated to provide an air bag with tethers and a flow regulator so that the air bag may have the merits of both, in which case, however, the problem is that if the flow regulator is disposed in the spouting direction of gas, the gas flow diverted by the tethers dashes against the tethers, detracting from the effect of flow regulation.

Therefore, a first object of this invention is to provide an air bag wherein although it combines tethers with a flow regulator, the effect of flow regulation by the flow regulator is not lost and with the air bag considered as a whole, both the deployment distance and the deployment speed are reduced, and the bag quickly spreads toward the outer periphery.

Further, the bag is suitably folded and stored in a housing installed in the middle of the steering wheel or the like. In this case, the upper and lower sides and the laterally opposite sides of the bag are often folded in a bellows fashion. The bellows type folding allows the folded sides to spread with ease. Therefore, when such bellows type folding is present in the vertically opposite sides and the horizontally opposite sides, the bellows type folded portions in the vertically opposite sides spread smoothly if the spouting direction of gas from the flow regulator is vertical; thus, the gas concentratedly moves in that direction. And the gas which has reached the upper and lower ends of the bag changes its direction to dash against the occupant-associated panel. Thus, with such folding system, the deployment speed of the bag cannot be reduced.

Accordingly, a second object of the invention is to provide an air bag having a flow regulator, wherein a particular folding system is employed in connection with the spouting direction of the gas flow reverted by the flow regulator, whereby the deployment speed is reduced.

DE 44 42 118 A1 discloses an air bag having the features in the preamble of appended claim 1 in common with the present invention.

### DISCLOSURE OF THE INVENTION

The present invention is defined in appended claim 1. Further advantageous features are set out in the dependent claims.

As a preferred embodiment of the invention, said flow regulator is a sheet which covers said inflator attaching opening, the middle portion of said sheet having a slack bulging toward said inflator-associated panel, said sheet being joined at at least two places on the peripheral edge thereof to said inflator-associated panel to form joined portions, and the spacing between a place on the peripheral edge of said sheet other than said joined portions and said inflator-associated panel may form openings for the reverted gas flow.

In this case, said tethers may be joined to said inflator-associated panel at places which are diametrically outside said joined portions, such arrangement being advantageous from the standpoint of manufacture of the bag. Further, said tethers are composed of said flow regulator, and connecting members which connect said flow regulator and said occupant-associated panel at those places on said flow regulator which may be nearer to said occupant-associated panel than are said joined portions.

Further, according to this invention, a bag for a vehicle air bag device mentioned at the outset is characterised in that in the interior of said bag construction, a flow regulator is disposed which diverts a gas flow spouting from the inflator, said flow regulator being provided with spout openings so that the gas after being diverted may flow in two mutually opposite directions toward the outer periphery of said bag construction, and a first pair of opposed sides of said bag construction are folded in said gas spouting direction and a second pair of opposed sides are folded in the direction orthogonal to said gas spouting direction, the folding of said first pair of sides allowing less easy deployment than the folding of said second pair of sides. Thus, the folding in the spouting direction of the gas from the flow regulator is such that it allows essentially less easy spreading attended by less easy gas flow, while the folding in the direction orthogonal to said spouting direction of the gas flow is such that it allows essentially easy spreading attended by easy gas flow; therefore, the gas spreads relatively uniformly toward the entire outer periphery of the bag. Therefore, the pressure pressing the occupant-associated panel is distributed, and hence the deployment speed of the bag can be greatly reduced.

In this case, first, said second pair of sides may be folded in a bellows fashion, and then said first pair of sides may be folded in a reverse roll fashion. In this case, the bellows type folding is the folding which allows easy spreading, and the reverse roll type folding is the folding which allows less easy spreading.

Further, in this case, said occupant-associated panel and said inflator-associated panel are connected together by tethers which prevent the distance between said two panels from exceeding a predetermined length, said tethers being disposed at positions not to obstruct the gas flow diverted by the flow regulator. This arrangement enhances the effect of reduction of the deployment speed of the bag.

In the thus-folded bag, advantageously the projecting height of said flow regulator is not more than 2/3 of the projecting height of said occupant-associated panel. If the projecting height of said flow regulator exceeds 2/3, then the flow regulating effect is considerably decreased, increasing the deployment speed of the bag.

Further, advantageously the width of said flow regulator is greater than the diameter of said inflator head. If the width of said flow regulator should be less than the diameter of said inflator head, this also detracts from the flow regulating effect and increases the deployment speed of the bag.

Further, in said various kinds of bags, said flow regulator may be made of a material which is impermeable to gas. With this arrangement, since the gas does not permeate the flow regulator, it is diverted without fail.

Further, in each of said bags for vehicle air bag devices, it is preferable that the deployment speed be 150 km/h or below at a point where the deployment distance is 200 mm or above. In this case, the occupant-associated panel is prevented from coming into heavy contact with the occupant's face or the like.

### BRIEF DESCRIPTION OF THE DRAWINGS

Fig. 1 is a cross-sectional view showing a bag for a vehicle air bag device in its inflated state according to an embodiment of the invention;
Fig. 2 is a sectional view taken along the line II-II in Fig. 1;
Fig. 3 is a sectional view taken along the line III-III in Fig. 2;
Fig. 4 is a perspective view of said bag;
Fig. 5 is a sectional view, similar to Fig. 1, showing a bag according to another embodiment of the invention;
Fig. 6 shows a folding system for the bag of Example 1, (a) showing the first folding step, (b) showing the second folding step;
Fig. 7 is a graph showing the deployment speed of the bags of Example 1 and Comparative Example 1;
Fig. 8 is a view, similar to Fig. 6, showing a folding system for the bag of Example 2;
Fig. 9 is a schematic view showing a reverse roll folding system, (a) showing the state before reversion to the occupant-associated panel, (b) showing the state after reversion;
Fig. 10 is a schematic view showing a forward roll folding system;
Fig. 11 is a view, similar to Fig. 6, showing a folding system for the bag of Comparative Example 2;
Fig. 12 is a graph showing the deployment speed of the bags of Example 2 and Comparative Example 2;
Fig. 13 is a graph showing vertical expansion of the bags of Examples 2 and 3;
Fig. 14 is a graph showing the deployment speed of the bag of Example 4;
Fig. 15 is a graph showing the deployment speed of the bag of Comparative Example 4;
Fig. 16 is a graph showing the deployment speed of the bag of Comparative Example 5; and
Fig. 17 is a schematic view showing various folding systems of bellows type.

### DETAILED DESCRIPTION OF EMBODIMENTS

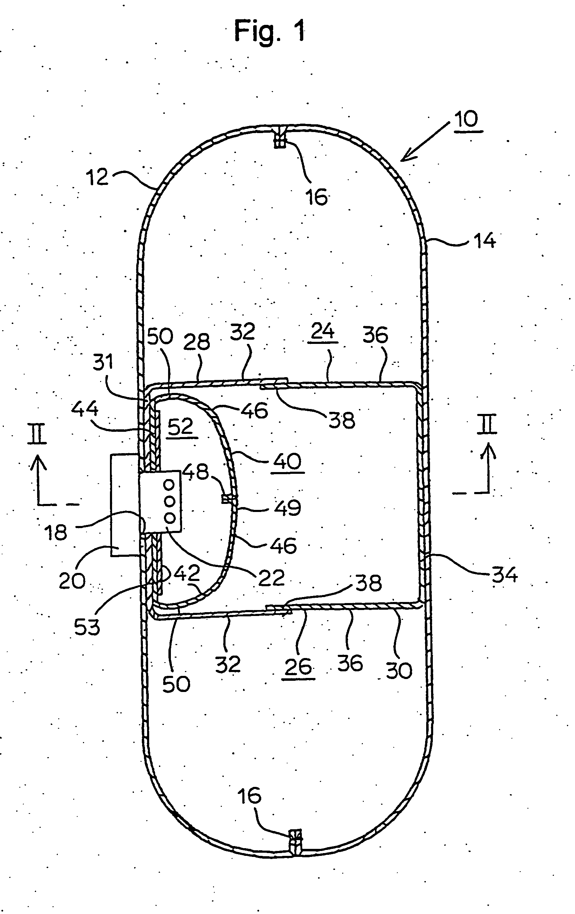

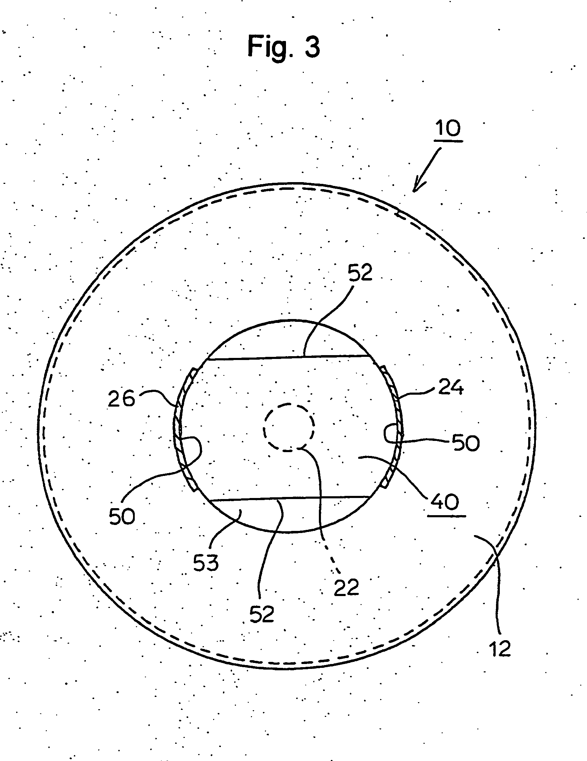

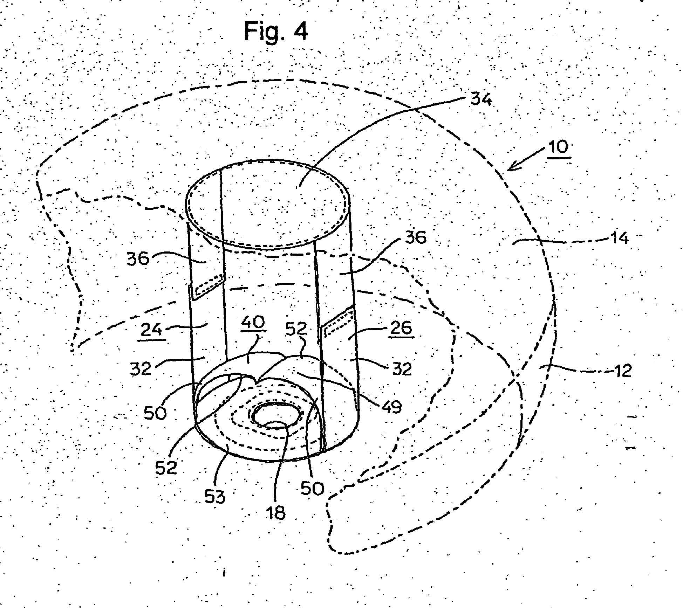

Figs. 1 through 4 show a bag for a vehicle air bag device according to an embodiment of this invention.

The bag **10** comprises an inflator-associated panel **12** and an occupant-associated panel **14**. These panels **12** and **14** are circular and made of a flexible material, such as cloth. The two panels **12** and **14** are sewn together as at **16** along their peripheral edges to form a bag construction. (For the sake of simplicity, the sewn portions are all omitted from the accompanying drawings.) Centrally formed in the inflator-associated panel is a circular port **18**, in which the head **22** of the inflator **20** is inserted. The gas spouting from the inflator **20** inflates the air bag **10** into a three-dimensional form, as shown.

The numerals **24** and **26** denote strap-like tethers made of a flexible material, such as cloth, serving to connect the inflator-associated panel **12** and the occupant-associated panel **14** and prevent the distance between the panels **12** and **14** from becoming greater than the tether length. The two tethers **24** and **26** are disposed on the diameter of the bag symmetrically with respect to the circular port **18**. Thereby, when the bag **10** has been deployed into the inflation-completed state, it retains a uniform flat shape, as shown. In this embodiment, the tethers **24** and **26** comprise a first tether forming cloth **28** sewn to the inflator-associated panel **12**, and a second tether forming cloth **30** sewn to the occupant-associated panel **14**. The first tether forming cloth **28** comprises a circular base portion **31**, and two leg portions **32** extending diametrically outward from two opposed places on the peripheral edge of said base portion **31** and having a width less than the diameter of said base portion **31**, said base portion **31** being sewn to the inflator-associated panel **12**. Similarly, the second tether forming cloth **30** comprises a circular base portion **34**, and two leg portions **36** extending diametrically outward from two opposed places on the peripheral edge of said base portion **34** and having a width less than the diameter of said base portion **34**, said base portion **34** being sewn to the occupant-associated panel **14**. And two pairs of leg portions **32, 32** and **36, 36** are respectively sewn together as at **38, 38,** thus forming said tethers **24** and **26**.

The numeral **40** denotes a flow regulator made of a flexible material, such as cloth. The flow regulator **40** is positioned such that when the bag **10** is inflated, the flow regulator is at some distance from the inflator-associated panel **12**. The flow regulator **40** has a width greater than the diameter of the inflator attaching opening **18**, covering the latter. The flow regulator **40** is formed as a portion of a flow regulator forming cloth **42**. The flow regulator forming cloth **42** comprises a circular base portion **44**, and two leg portions **46** extending diametrically outward from two opposed places on the peripheral edge of said base portion **44**. This base portion **44** is sewn from above the base portion **31** of said tether to the inflator-associated panel **12**. The free ends of the two leg portions **46** are sewn together as at **48**, thereby providing the annular flow regulator **40**. In this manner, the flow regulator **40** is joined at its two opposite sides **50, 50** to the inflator-associated panel **12** but it is not sewn at the other opposed sides **52, 52** thereof to the inflator-associated panel **12**. These non-sewn sides **52** form spout openings for gas flow.

Disposed on the base portion **44** of the flow regulator forming cloth **42** is a reinforcing cloth **53** of substantially the same shape as said base portion. This reinforcing cloth **53** is sewn from above the base portion **31** of the first tether forming cloth **28** and the base portion **44** of the flow regulator forming cloth **42** to the inflator-associated panel **12**.

The gas spouting from the inflator **20** dashes against the top **49** and joined portions **50** of said flow regulator **40** and is thereby diverted, then flowing diametrically outward through the spout openings **52**. Thus, the gas flow does not directly push the occupant-associated panel **14** toward the occupant. Therefore, the speed at which the occupant-associated panel moves to the occupant can be reduced.

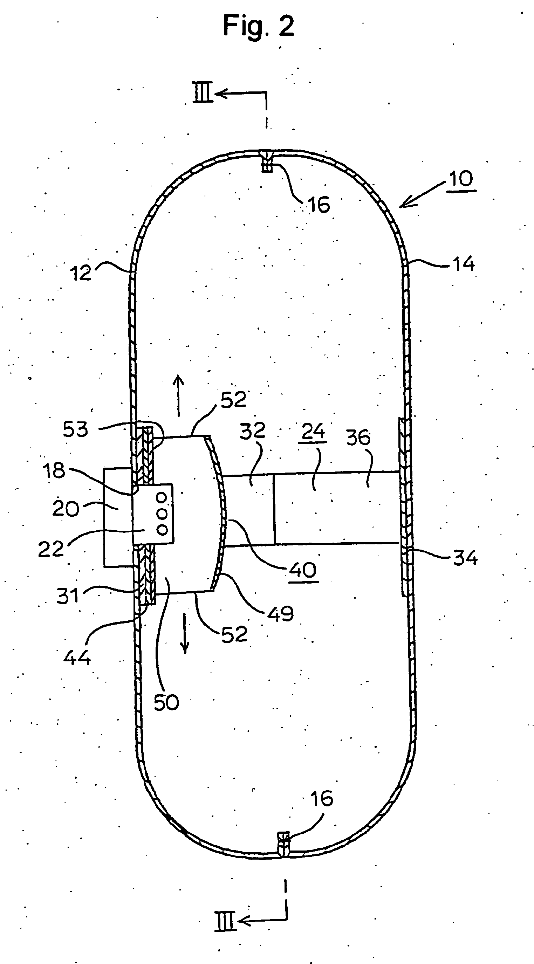

As is obvious from the above description, the tethers **24** and **26** are disposed clear of the spout openings **52**. That is, the tethers **24** and **26** are attached diametrically outside the places **50** where the flow regulator **40** is joined to the inflator-associated panel **12**. Therefore, the gas flow diverted by the flow regulator **40** and passing through the spout openings **52** (see arrows in Fig. 2) is not obstructed by the tethers **24** and **26**. Thus, the air bag in this embodiment is capable of achieving two effects, one of limiting the deployment of the bag to a given distance by means of the tethers and the other of reducing the deployment speed of the occupant-associated panel **14** by means of the flow regulator **40**.

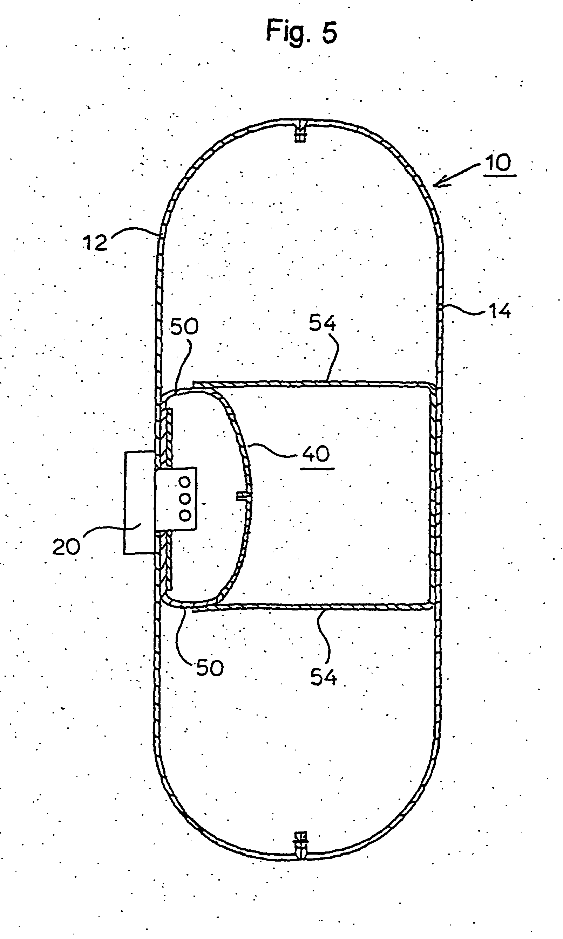

In the above embodiment, the flow regulator and tethers have been separately prepared. Alternatively, however, as shown in Fig. 5, the opposite sides **50** of the flow regulator **40** may be connected to the occupant-associated panel **14** by connecting members **54** similar to the second tether forming cloth **30** shown in Fig. 1. In that case, the flow regulator **40** and the connecting members **54** cooperate with each other to constitute the tether.

Though not shown, the bag body may have tethers alone attached thereto, and separately therefrom, an inflator having a flow regulator attached thereto is prepared, said inflator being attached to the inflator-associated panel to position the flow regulator within the bag.

The diameters of the inflator-associated panel and occupant-associated panel are 500 - 800 mm in the flat state of the bag. And the size of the flow regulator is such that the width is 50 - 300 mm and the length is 50 - 400 mm, which size is preferable from the standpoint of reducing the deployment speed of the bag. In this case, the "length" is the length of the flow regulator as measured between the sewn portions closest to the peripheral edge when the base portion of the flow regulator forming cloth is sewn to the inflator-associated panel, i.e., the length of slack of the flow regulator inflated toward the occupant-associated panel. Further, the tethers are 150 - 300 mm long, for example.

### Example 1

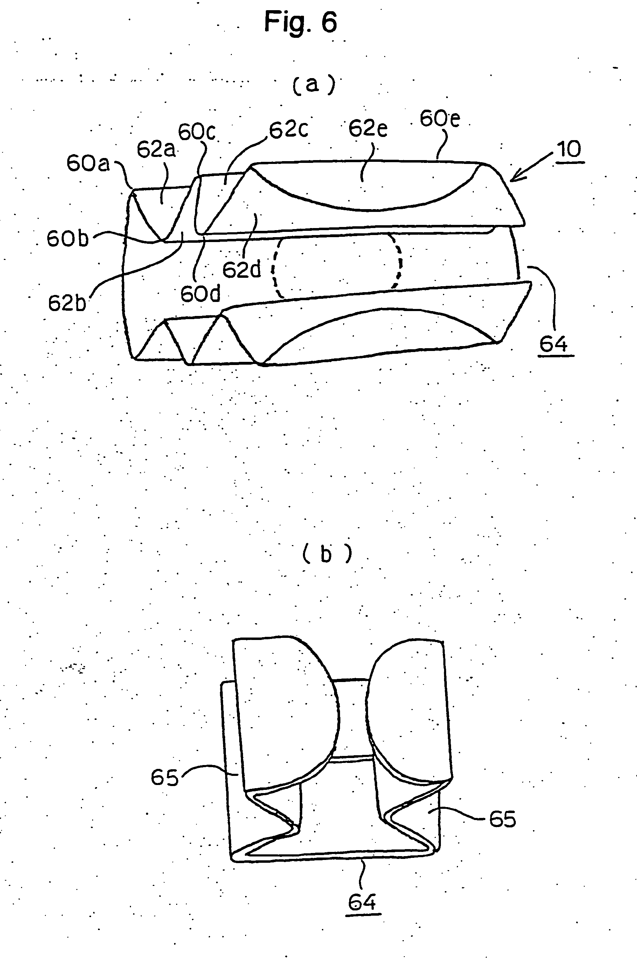

Tests were made using the bag of Figs. 1 through 4 to prove that the deployment speed is reduced. In that case, the flow regulator used was 250 mm wide and 250 mm long. This width is considerably great, as compared with the diameter of the opening, which is 90 mm, for the inflator. Further, the projecting height of the flow regulator is about 1/3 of the projecting height of the occupant-associated panel. And the bag was positioned to allow the gas flow after being regulated to move vertically. That is, the spout openings **52** in the flow regulator **40** were vertically directed and the tethers **24** and **26** were transversely, that is, horizontally positioned. In this connection, it is to be noted that the bag folding system is also important as a factor influencing the deployment speed of the bag. In the tests conducted, the upper and lower sides of the bag **10** were folded onto the occupant-associated panel **14** in a bellows fashion, as shown in Fig. 6 (a). That is, the upper and lower sides of the bag **10** were folded at a series of places **60a, 60b, 60c, 60d, 60e** ... positioned in the range from the middle of the bag **10** to the upper and lower peripheral edges, thereby providing a plurality of folded pieces **62a, 62b, 62c, 62d, 62e** ... successively stacked on the occupant-associated panel **14**. Then, as shown in Fig. 6 (b), the opposite lateral sides **65** of the folded body **64** thus obtained were folded on the occupant-associated panel **14** likewise in a bellows fashion. The thus-folded bag is referred to as Example 1. On the other hand, the air bag of comparative Example 1 differs from Example 1 only in that the tethers are disposed outside the gas spout opening in the flow regulator (that is, the tethers are in a position to obstruct the spouting of gas); in the other respects, it is the same as in Example 1.

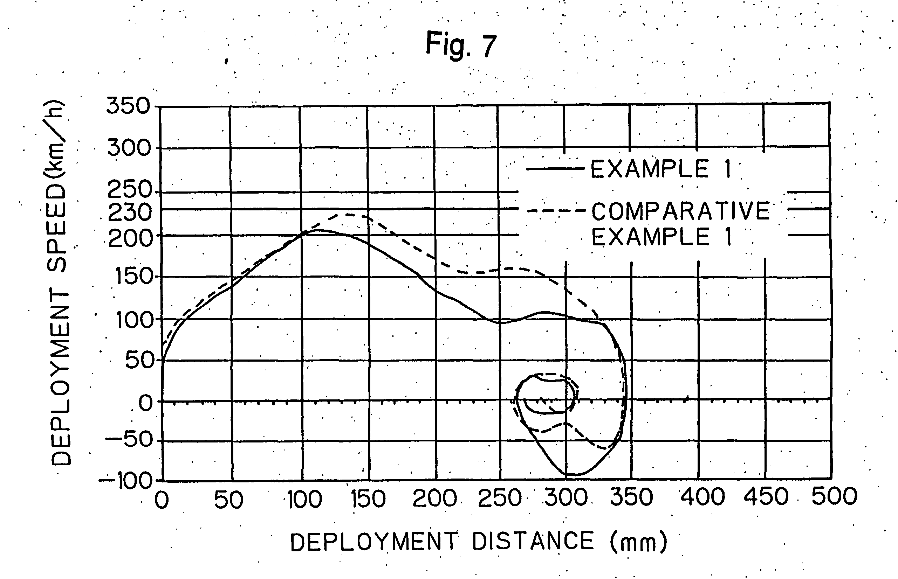

In the bags of Example 1 and Comparative Example 1, gas was evolved from the inflator, causing the gas flow to deploy the bag, and the deployment speed was measured. The result is shown in Fig. 7. In the case of Example 1, the deployment speed continued to decrease from the time when the deployment distance was 110 mm to the time when it was 250 mm, and at the point where the deployment distance was about 250 mm, the deployment speed decreased to 90 km/h. In contrast thereto, in the case of Comparative Example 1, the deployment speed was 160 km/h at a point where the deployment distance was 250 mm. Thus, it is seen that by disposing the tethers at places clear of the gas spouting from the flow regulator, the deployment speed of the bag, particularly the deployment speed at a point nearer to the occupant, can be greatly reduced.

### Example 2

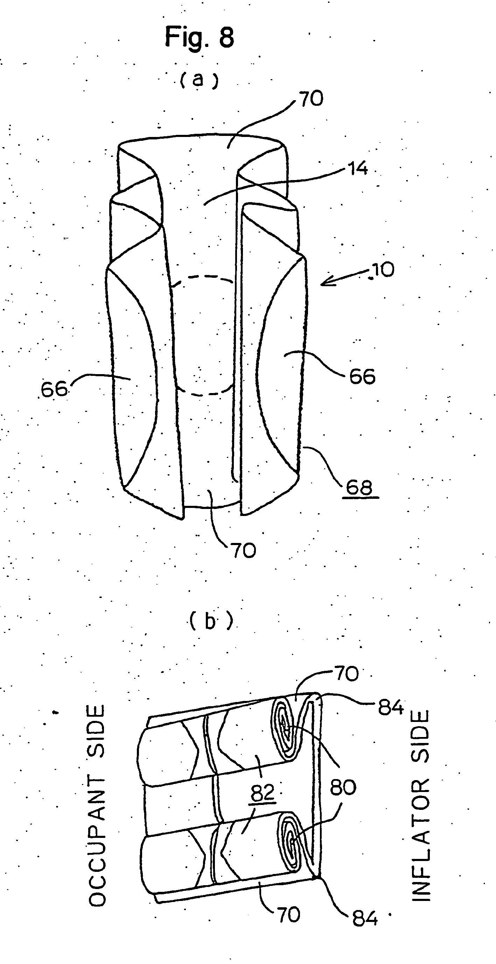

As in Example 1, the bag shown in Figs. 1 through 4 (in which bag the flow regulator was 170 mm wide and 180 mm long) was used and it was positioned such that the direction of the gas flow after flow regulation was vertical. However, the folding system used differed from that used in Example 1. That is, as shown in Fig. 8 (a), first, the opposite lateral sides **66** of the bag were folded onto the occupant-associated panel **14** in a bellows fashion, and then, the upper and lower sides **70** of the folded body **68** thus obtained were folded using a reverse roll type, as shown in Fig. 8 (b).

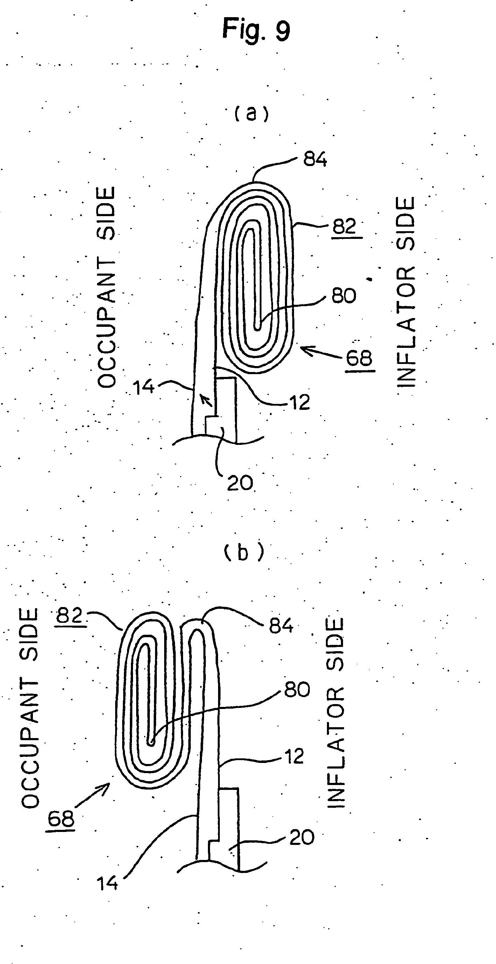

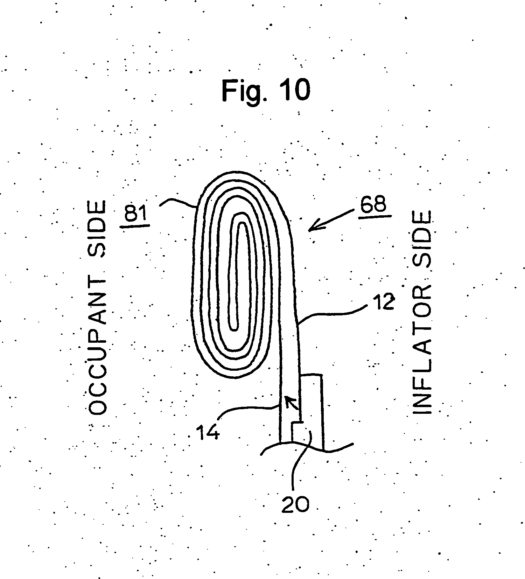

The "reverse roll type" folding mentioned herein refers to a state in which, as shown in Fig. 9 (a), the terminal end of the side of the bag is wound and folded onto the side of the inflator-associated panel **12**. Whereas the folding system in which, as shown in Fig. 10, the terminal end of the side of the bag is wound and folded onto the side of the occupant-associated panel **14** is called the forward roll type folding system, it is called the "reverse" roll type folding system in that the bag is reversely folded. To describe in more detail with reference to the drawings, in the case where the reverse roll type folding is to be effected in the upper and lower sides **70** of the bag, as shown in Fig. 8 (b), the upper and lower sides **70** of the folded body **68** shown in Fig. 8 (a) are successively folded with the front ends **80** thereof disposed inside, thereby forming rolls **82**. This is the state shown in Fig. 9 (a). And from this state, each roll **82** is reversed over its base **84** to the side of the occupant-associated panel **14**, thereby establishing the state shown in Figs. 9 (b) and 8 (b). Fig. 9 (a) and Fig. 9 (b) each show the reverse roll type folding. In practice, for the sake of convenience of receiving the folded bag, the way of folding shown in Fig. 9 (b) is employed more often. In the reverse roll type folding, even if the gas evolved in the inflator **20** pushes the occupant-associated panel **14** as indicated by the arrow in Fig. 9 (a), the roll **82** is present on the side opposite to the direction of push, forming a resistance to prevent the occupant-associated panel **14** from readily moving forward. In contrast thereto, in the forward roll type folding, when the occupant-associated panel **14** is pushed in the direction of arrow, as can be seen from Fig. 10, the roll **81** is moved forward. After all, the occupant-associated panel **14** easily moves forward. Thus, the reverse roll type folding provides less easy unfolding than the forward roll type folding.

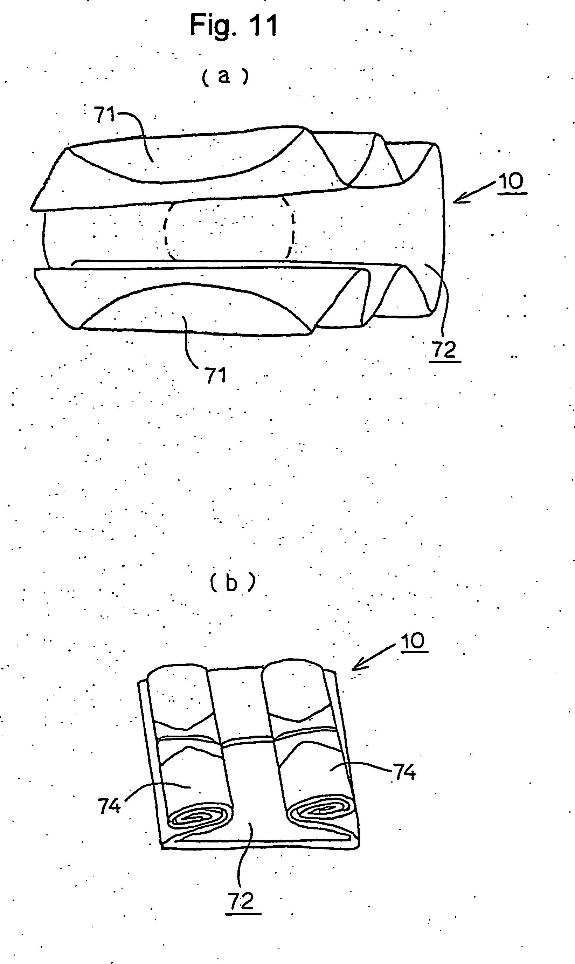

As Comparative Example 2, a bag having tethers but not having a flow regulator was used, and the folding method used was such that, as shown in Fig. 11, the upper and lower sides **71** of the bag were folded toward the occupant-associated panel **14** in a bellows fashion and then the opposite lateral sides **74** of the folded body **72** thus obtained were folded toward the occupant-associated panel **14** in a reverse roll fashion.

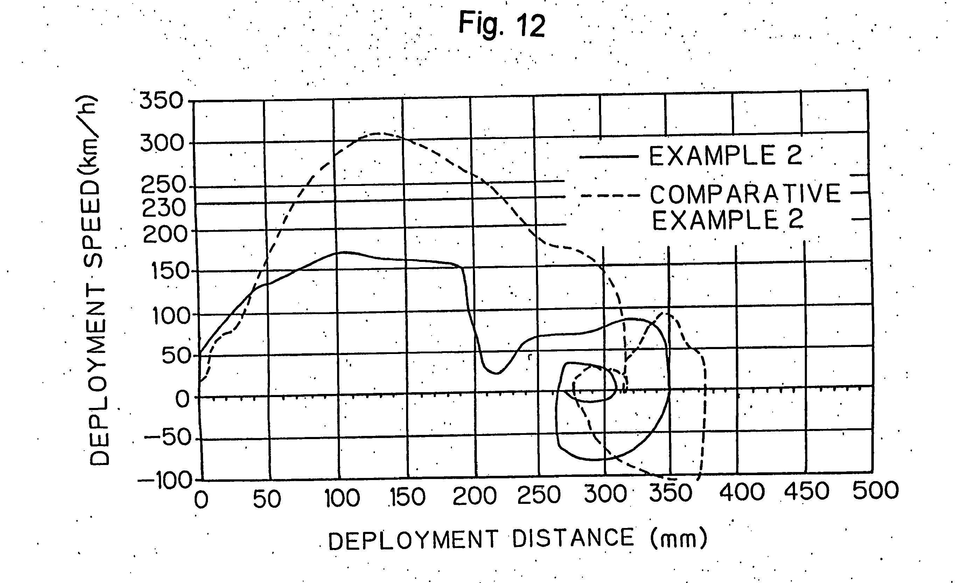

The result is shown in Fig. 12. The bag of Example 2 has its deployment speed reduced as a whole as compared with the bag of Comparative Example 2. It is greatly reduced particularly at a point where the deployment distance is 200 - 300 mm or thereabouts. The reason is that since the folding system which allows the bag to deploy with less ease is employed in the gas spouting direction, the gas flows relatively uniformly throughout toward the entire outer periphery of the bag, producing a decreased pushing force on the occupant-associated panel **14**. In addition, the vertical deployment of the bag is also quick. In addition, the difference in the amount of maximum jump-out between Example 2 and Comparative Example 2 is due to the difference in tether length.

### Example 3

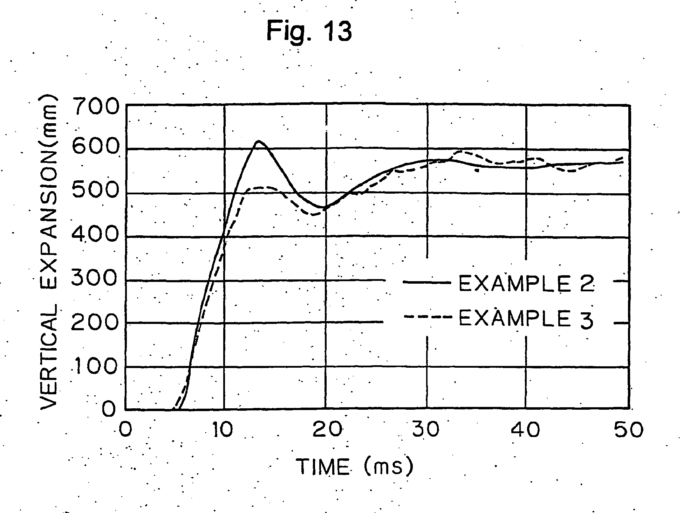

In Example 3, the spouting direction of gas from the flow regulator was horizontal and the folding system used was such that first, the upper and lower sides of the bag were folded in a bellows fashion and then the opposite lateral sides of the resulting folded body were folded in a reverse roll fashion. A comparison between Examples 2 and 3 is shown in Fig. 13. The width of the initial vertical spread of the bag at the beginning of deployment is greater in the case of Example 2. This shows that the vertical spread is a little quicker in the case of the bag of Example 2.

### Example 4

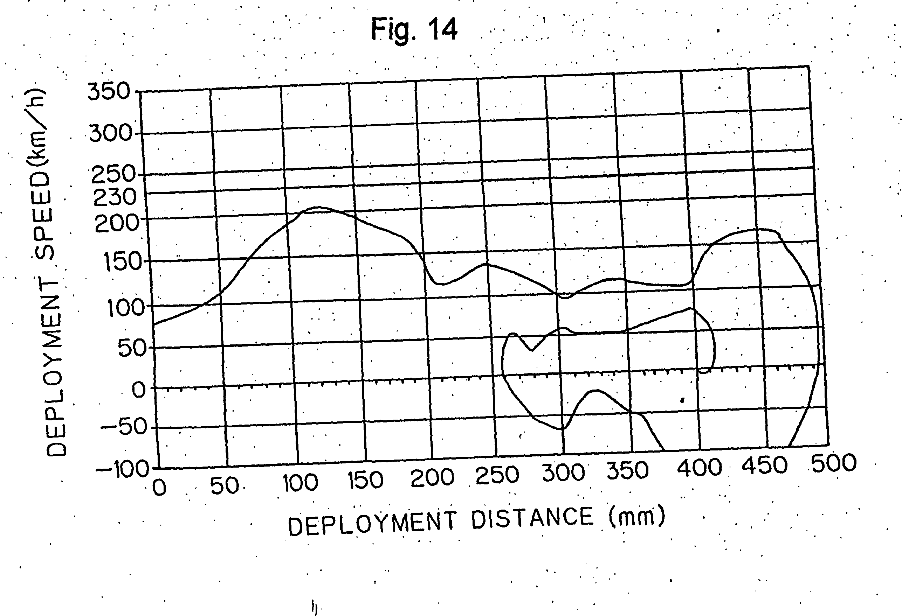

The bag used was the same as in Example 2 except that it has no tethers and thus does not present an embodiment of the present invention. The bag was folded as in Example 2. The result is shown in Fig. 14. As compared with Comparative Example 2 (see Fig. 12), the overall deployment speed is decreased. And it is seen that even if the bag has no tethers, since the folding system which allows the bag to deploy with less ease is employed in the spouting direction of gas from the flow regulator, there is obtained some effect of reduction of deployment speed; however, the amount of projection toward the occupant is substantially increased owing to the absence of tethers.

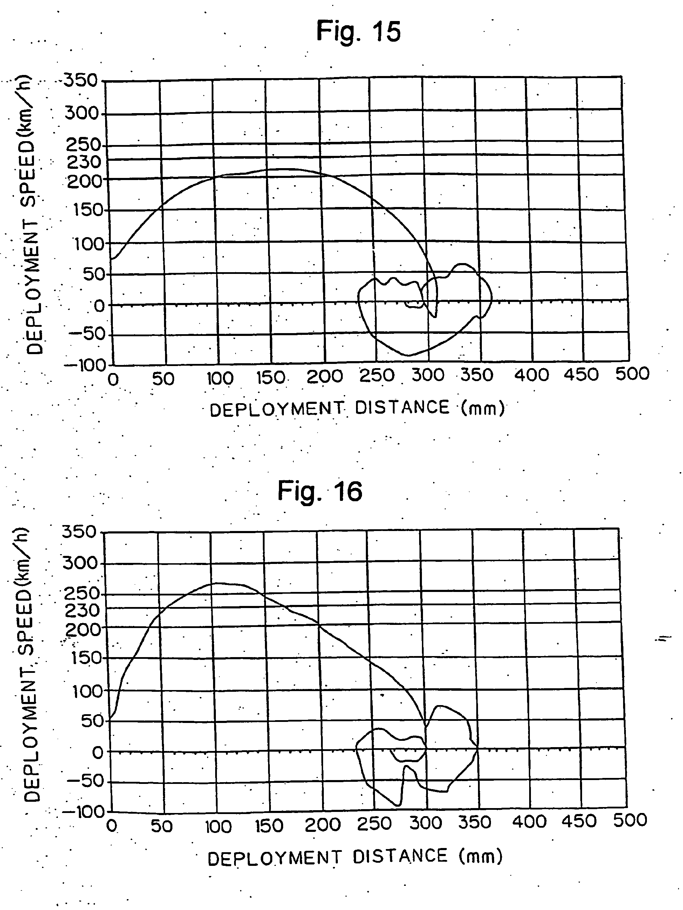

In addition, as Comparative Example 4, a bag was prepared on the basis of the bag of Example 2 such that the projecting height of the flow regulator exceeded 2/3 of the projecting height of the occupant-associated panel. The result is shown in Fig. 15. Further, as Comparative Example 5, a bag was prepared on the basis of the bag of Example 2 such that the flow regulator covered only about 90% of the diameter of the inflator head. The result is shown in Fig. 16. In each case, the deployment speed is generally high in contrast to Examples 1 and 2; it is remarkably high as compared with the bag of this invention particularly at a point where the deployment distance is 200 - 25 mm.

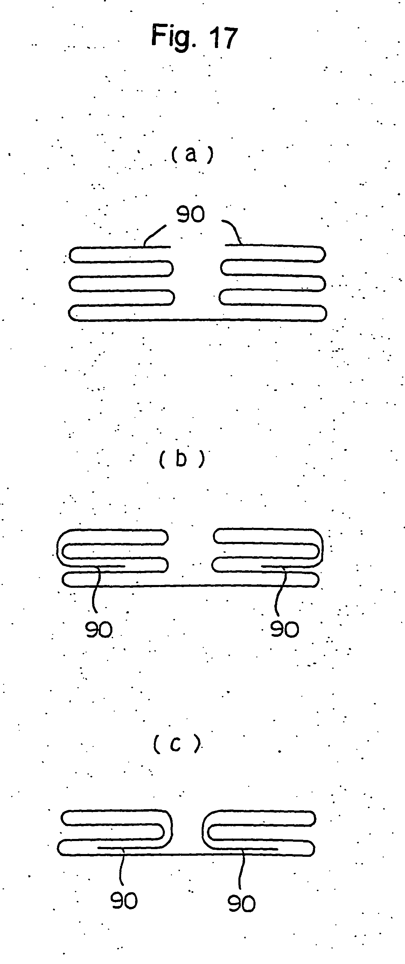

In Examples 2 and 3, the reverse roll type folding system was used as the folding system which allows the bag to deploy with less ease and the bellows type folding system was used as the folding system which allows the bag to deploy with ease. Alternatively, it is possible to use the reverse roll type folding system as the folding system which allows the bag to deploy with less ease and the forward roll type folding system (Fig. 10) as the folding system which allows the bag to deploy with ease. Further, Fig. 17 (a) shows usual bellows type folding. Figs. 17 (b) and (c) show modifications of the bellows type folding, wherein the front ends **90** are inserted into the bellows from outside or inside and held therein. Therefore, the systems shown in Figs. 17 (b) and (c) may be employed as systems which allow the bag to deploy with less ease and the one shown in Fig. 17 (a) as a system which allows the bag to deploy with ease. Further, in Examples 2 and 3, the bag was folded first by the method allowing the bag to deploy with ease and then by the method allowing it to deploy with less ease; however, the order may be reversed. Further, in the bellows type folding, reverse roll type folding, and other forms of folding used in this invention, the bag is usually folded on the occupant-associated panel; however, it may be folded on the inflator-associated panel.

### INDUSTRIAL APPLICABILITY

In the bag for a vehicle air bag device according to this invention, since the tethers are disposed at places clear of the spouting direction of gas from the flow regulator, the effect of flow regulation due to the flow regulator is not spoiled by the tethers, reliably leading the gas flow radially toward the outer peripheral edge of the bag. Thereby, the initial deployment speed of the bag moving toward the occupant-associated panel can be reduced.

Further, in the bag for a vehicle air bag device according to this invention, since the folding system which allows the bag to deploy with less ease is employed in the spouting direction of gas from the flow regulator, the gas flow can be uniformly lead sideways, thereby reducing the deployment speed of the bag moving toward the occupant-associated panel.

## Claims

1. A bag for a vehicle air bag device wherein an occupant-associated panel **(14)** and an inflator-associated panel **(12)** are joined together along their peripheral edges to provide a flexible bag construction which can be inflated into a three-dimensional form, said inflator-associated panel **(12)** is formed with an opening for attaching an inflator **(20),** wherein
a flow regulator **(40)** is disposed in the interior of said bag construction to divert the gas flow spouted from the inflator toward the outer periphery of said bag construction, said flow regulator **(40)** comprising a base portion **(44)** having an opening for inserting the head **(22)** of the inflator (20) and flow inflator members **(46)** extending from said base portion **(44)**
said occupant-associated panel **(14)** and said inflator-associated panel **(12)** are connected by tethers **(24, 26)** which prevent the spacing between the two panels **(12, 14)** from exceeding a predetermined length, and
said tethers **(24, 26)** are disposed at positions where they do not obstruct the flow of gas diverted by said flow regulator **(40),**
**characterized in that**
the base portion **(44)** of the flow regulator **(40)** is sewn together with a reinforcing cloth (53) to the inflator-associated panel **(12),** and
the flow inflator members **(46)** comprise at least two leg portions **(46)** extending from the base portion **(44)** whose free ends **(48)** are sewn together.

2. The bag of claim 1, wherein
said flow regulator **(40)** is a sheet which covers said inflator attaching opening **(18),**
the middle portion of said sheet has a slack bulging toward said inflator-associated panel **(12),**
said sheet is joined at at least two places on the peripheral edge thereof to said inflator-associated panel **(12)** to form joined portions, and
the spacing between a place on the peripheral edge of said sheet other than said joined portions and said inflator-associated panel **(12)** forms openings (52) for the reverted gas flow.

3. The bag of claim 2, wherein said tethers **(24, 26)** are joined to said inflator-associated panel **(12)** at places which are diametrically outside said joined portions.

4. The bag of claim 2, wherein said tethers **(24, 26)** are composed of said flow regulator **(40),** and connecting members which connect said flow regulator **(40)** and said occupant-associated panel **(14)** at those places on said flow regulator **(40)** which are nearer to said occupant-associated panel **(14)** than are said joined portions.

## Patentansprüche

1. Kissen für eine Fahrzeugairbagvorrichtung, wobei eine Seite (14) zum Insassen hin und eine Seite (12) zum Gasgenerator hin entlang ihrer Randkanten miteinander verbunden sind, um für eine flexible Kissenkonstruktion zu sorgen, die in eine dreidimensionale Form aufgeblasen werden kann, wobei die Wand (12) zum Gasgenerator hin mit einer Öffnung zum Befestigen eines Gasgenerators (20) ausgebildet ist, wobei
eine Strömungsregelungseinrichtung (40) im Inneren der Kissenkonstruktion angeordnet ist, um den aus dem Gasgenerator ausgestoßenen Gasstrom zum äußeren Randbereich der Kissenkonstruktion zu lenken, wobei die Strömungsregelungseinrichtung (40) einen Basisabschnitt (44) mit einer Öffnung zum Einführen des Kopfes (22) des Gasgenerators (20) sowie vom Basisabschnitt (44) aus verlaufende Strömungsgeneratorelemente (46) umfasst,
wobei die Wand (14) zum Insassen hin und die Wand (12) zum Gasgenerator hin miteinander durch Leinen (24, 26) verbunden sind, die verhindern, dass der Abstand zwischen den zwei Wänden (12, 14) eine vorgegebene Länge überschreitet, und
wobei die Leinen (24, 26) an Stellen angeordnet sind, an denen sie die von der Strömungsregelungseinrichtung (40) gelenkte Gasströmung nicht behindern,
**gekennzeichnet dadurch, dass**
der Basisabschnitt (44) der Strömungsregelungseinrichtung (40) mit einem Verstärkungsgewebe (53) zusammen an die Seite (12) zum Gasgenerator hin angenäht ist, und
die Strömungsgeneratorelemente (46) mindestens zwei Beinabschnitte (46) aufweisen, die vom Basisabschnitt (44) aus verlaufen und deren freie Enden (48) zusammengenäht sind.

2. Kissen nach Anspruch 1, wobei
die Strömungsregelungseinrichtung (40) eine Lage ist, die die Öffnung (18) zum Befestigen des Gasgenerators bedeckt,
der mittlere Abschnitt der Lage einen Durchhang aufweist, der zur Seite (12) zum Gasgenerator hin aufgewölbt ist,
die Lage an mindestens zwei Stellen auf ihrer Randkante mit der Seite (12) zum Gasgenerator hin verbunden ist, um verbundene Abschnitte zu bilden, und
der Zwischenbereich zwischen einer von den verbundenen Abschnitten verschiedenen Stelle auf der Randkante der Lage und der Seite (12) zum Gasgenerator hin Öffnungen (52) für die zurückgelenkte Gasströmung bildet.

3. Kissen nach Anspruch 2, wobei die Leinen (24, 26) mit der Seite (12) zum Gasgenerator hin an Stellen verbunden sind, die sich bezüglich des Durchmessers außerhalb der verbundenen Abschnitte befinden.

4. Kissen nach Anspruch 2, wobei die Leinen (24, 26) aus der Strömungsregelungseinrichtung (40) und Verbindungselementen zusammengesetzt sind, die die Strömungsregelungseinrichtung (40) und die Seite (14) zum Insassen hin an den Stellen auf der Strömungsregelungseinrichtung (40) verbinden, die näher an der Seite (14) zum Insassen hin liegen als die verbundenen Abschnitte.

## Revendications

1. Sac pour air bag de véhicule dans lequel une paroi associée à l'occupant (14) et une paroi associée au dispositif de gonflage (12) sont jointes ensemble le long de leurs bords périphériques pour fournir une construction de sac flexible qui peut être gonflée en une forme tridimensionnelle, ladite paroi associée au dispositif de gonflage (12) comporte une ouverture pour fixer un dispositif de gonflage (20), dans lequel
un régulateur de flux (40) est disposé à l'intérieur de ladite construction de sac pour dévier le flux de gaz jaillissant du dispositif de gonflage vers la périphérie extérieure de ladite construction de sac, ledit régulateur de flux (40) comprenant une partie de base (44) comportant une ouverture pour insérer la tête (22) du dispositif de gonflage (20) et des éléments de flux de dispositif de gonflage (46) s'étendant de ladite partie de base (44),
ladite paroi associée à l'occupant (14) et ladite paroi associée au dispositif de gonflage (12) sont reliées par des longes (24, 26) qui empêchent la distance entre les deux parois (12, 14) de dépasser une longueur prédéterminée, et
lesdites longes (24, 26) sont disposées à des positions où elles ne gênent pas l'écoulement de gaz dévié par ledit régulateur de flux (40),
**caractérisé en ce que**
la partie de base (44) du régulateur de flux (40) est cousue avec un tissu de renforcement (53) sur la paroi associée au dispositif de gonflage (12), et
les éléments de flux de dispositif de gonflage (46) comprennent au moins deux parties formant pattes (46) s'étendant de la partie de base (44) dont les extrémités libres (48) sont cousues l'une avec l'autre.

2. Sac selon la revendication 1, dans lequel
ledit régulateur de flux (40) consiste en une feuille qui recouvre ladite ouverture de fixation de dispositif de gonflage (18),
la partie centrale de ladite feuille comporte une partie lâche faisant saillie vers ladite paroi associée au dispositif de gonflage (12),
ladite feuille est jointe en au moins deux endroits sur son bord périphérique à ladite paroi associée au dispositif de gonflage (12) pour former des parties jointes, et
la distance entre un endroit sur le bord périphérique de ladite feuille autre que lesdites parties jointes et ladite paroi associée au dispositif de gonflage (12) forme des ouvertures (52) pour le flux de gaz de retour.

3. Sac selon la revendication 2, dans lequel lesdites longes (24, 26) sont jointes à ladite paroi associée au dispositif de gonflage (12) à des endroits qui sont diamétralement à l'extérieur desdites parties jointes.

4. Sac selon la revendication 2, dans lequel lesdites longes (24, 26) sont composées dudit régulateur de flux (40) et d'éléments de liaison qui relient ledit régulateur de flux (40) et ladite paroi associée à l'occupant (14) aux endroits sur ledit régulateur de flux (40) qui sont plus près de ladite paroi associée à l'occupant (14) que ne le sont lesdites parties jointes.
